# EUROPEAN PATENT SPECIFICATION

(11) **EP 2 732 361 B1**
(45) Date of publication and mention of the grant of the patent: **23.05.2018**
(21) Application number: 11869235.9
(22) Date of filing: 12.07.2011
(51) Int. Cl.: G06F 3/044, G06F 3/041

(54) **ELECTRONIC DEVICE AND METHOD OF CONTROLLING A TOUCH-SENSITIVE DISPLAY**
ELEKTRONISCHE VORRICHTUNG UND VERFAHREN ZUR STEUERUNG EINER BERÜHRUNGSEMPFINDLICHEN ANZEIGE
DISPOSITIF ÉLECTRONIQUE ET PROCÉDÉ DE COMMANDE D'UN AFFICHAGE TACTILE

(43) Date of publication of application: 21.05.2014
(73) Proprietor: BlackBerry Limited, Waterloo, ON N2K 0A7 (CA)
(72) Inventor: PEREVERZEV, Stanislav, Sunnyvale, CA 94089 (US); GOLOVCHENKO, Mykola, Sunnyvale, CA 94089 (US); STACY, William, Turlay, San Jose, CA 95120 (US)
(74) Representative: Hanna Moore + Curley
(86) International application number: PCT/US2011/043667
(87) International publication number: WO 2013/009298

(56) References cited:
- EP-A1- 1 901 530
- WO-A1-2010/018889
- KR-A- 20090 076 126
- KR-A- 20100 009 020
- KR-A- 20110 063 985
- KR-B1- 100 932 428
- US-A1- 2009 195 959
- US-A1- 2010 079 387
- US-A1- 2010 123 678
- US-A1- 2010 139 955
- US-A1- 2011 080 373

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 702.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. Improvements in devices with touch-sensitive displays are desirable.

US 2011/080373 A1 discloses a touch panel having a sensing electrode for producing a first capacitance between the sensing electrode and an exterior object, and a grounded shielding layer separated from the sensing electrode by a gap and used for producing a second capacitance between the shielding layer and the sensing electrode when the exterior object is pressed on the touch panel and causes the gap to vary. The quantity of variation in the first and second capacitances is used for detecting a touch-control action of the exterior object which may be a charged object like a finger as well as an insulating object like a glove.

### SUMMARY

A device according to claim 1 includes a touch sensor and at least one electrode spaced from touch sensor by an air gap, wherein a change in capacitance between the touch sensor and the electrode is utilized to determine a value related to a force causing bending of the touch sensor. A method according to claim 5 includes detecting a touch utilizing a touch sensor of a touch-sensitive display, and utilizing a change in capacitance between the touch sensor and the electrode to determine a value related to a force causing bending of the touch sensor. An electronic device includes a display, an electrode disposed on the display, and a touch sensor spaced form the at least one electrode by an air gap, wherein a change in capacitance between the electrode and the touch sensor is utilized to determine a value related to a force. A device includes a substrate having a first side and second side, a first set of touch-sensing electrodes disposed on the first side of the substrate, a force-sensing electrode disposed on the second side of the substrate, and a display including a ground shield. A change in capacitance between the force sensing electrode and the ground shield is utilized to determine a value related to a force imparted on the device.

### BRIEF DESCRIPTION OF THE DRAWINGS

FIG. 1 is a block diagram of a portable electronic device in accordance with the present disclosure.
FIG. 2 is a sectional side view of a portable electronic device including a touch-sensitive display in accordance with the disclosure.
FIG. 3 is a partial cross-section of the touch-sensitive display in accordance with the disclosure.
FIG. 4 is a sectional side view illustrating a force applied to the touch-sensitive display in accordance with the disclosure.
FIG. 5 is a flowchart illustrating a method of detecting a force applied to the touch-sensitive display in accordance with the disclosure.
FIG. 6 is a sectional side view of another portable electronic device including a touch-sensitive display in accordance with the disclosure.
FIG. 7 is a partial cross section of a portion of the touch-sensitive display in accordance with the disclosure.
FIG. 8 is a sectional side view illustrating a force applied to the touch-sensitive display in accordance with the disclosure.

### DETAILED DESCRIPTION

The following describes an electronic device including a touch sensor, and at least one electrode spaced from touch sensor by an air gap, wherein a change in capacitance between the touch sensor and the electrode is utilized to determine a value related to a force causing bending of the touch sensor.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The electronic device may be a portable electronic device without wireless communication capabilities, such as a handheld electronic game, digital photograph album, digital camera, media player, e-book reader, and so forth.

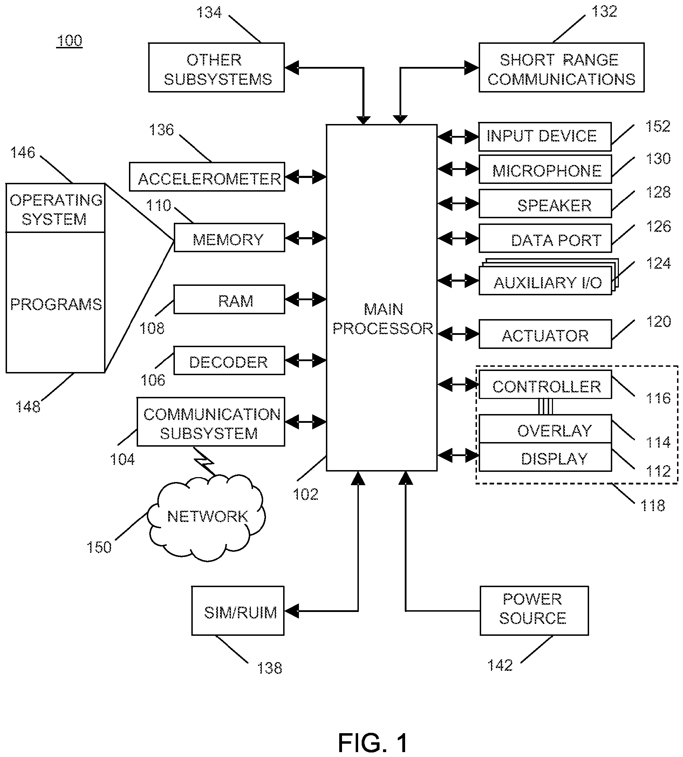

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an auxiliary input/output (I/O) subsystem 124, a data port 126, a speaker 128, a microphone 130, short-range communications 132, and other device subsystems 134. Input via a graphical user interface is provided via the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may optionally interact with one or more actuators 120. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

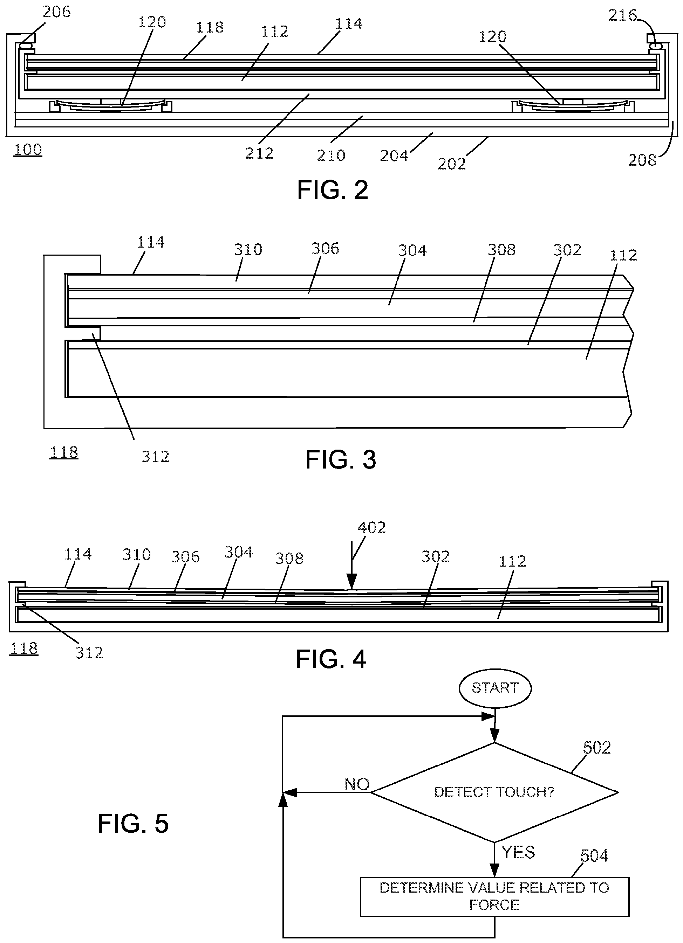

A cross section of a portable electronic device 100 including the touch-sensitive display 118 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204, and supports the actuators 120. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The display 112 may be any suitable display such as, for example, a liquid crystal display (LCD) or an organic light emitting diode (OLED) display. An LCD may include, for example, a backlight, liquid crystal disposed between positive and negative electrodes, polarizers, filters, and a cover, such as a glass cover.

The overlay 114 may be an assembly of multiple layers in a stack including, for example, one or more capacitive touch sensor layers separated by a substrate or other barrier, and a cover.

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable input member, such as a finger, thumb, appendage, or other items, for example, a stylus, pen, or other pointer, depending on the nature of the touch-sensitive display 118. The controller 116 and/or the processor 102 may detect a touch by any suitable input member on the touch-sensitive display 118. Multiple simultaneous touches may be detected.

The optional actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. Other different types of actuators 120 may be utilized than those described herein.

A mechanical dome switch actuator may be utilized and tactile feedback may be provided when the dome collapses due to imparted force and when the dome returns to the rest position after release of the switch.

Alternatively, the actuator(s) 120 may comprise one or more piezoelectric (piezo) devices that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric ceramic disk adhered to a substrate, such as a metal substrate. The substrate bends when the piezoelectric device contracts due to build up of charge/voltage at the piezoelectric device or in response to a force, such as an external force applied to the touch-sensitive display 118. The charge may be varied by varying the applied voltage/current, thereby controlling the force applied by the piezo actuators. The charge/voltage may be removed by a controlled discharge voltage/current to decrease the force applied by the piezo actuators 120. The charge/voltage may advantageously be removed over a relatively short period of time to provide tactile feedback to the user.

A partial cross section of the touch-sensitive display 118 is shown in FIG. 3. In the example illustrated in FIG. 3, a ground shield 302 is disposed on the display 112. The ground shield 302 may be, for example, an electrode such as a transparent thin film conductive coating or a fine distribution of electrodes such as a patterned conductive layer of, for example, indium tin oxide (ITO). The ground shield 302 is disposed on the display 112 to protect the display from electrostatic discharge, for example.

The touch-sensitive overlay 114 includes a substrate 304, which may comprise glass or plastic. An upper set of touch-sensing electrodes 306 is disposed on a top side of the substrate 304 and a lower set of touch-sensing electrodes 308 is disposed on the bottom side of the substrate 304. The upper set of touch-sensing electrodes 306 may be, for example, ITO deposited on the top side of the substrate 304. The lower set of touch-sensing electrodes 308 may be ITO deposited on the bottom side of the substrate 304. The term deposited refers to vapor deposition or a similar process. The upper set of touch-sensing electrodes 306 are separated from the lower set of touch-sensing electrodes 308 by the substrate 304. The upper and lower sets of touch-sensing electrodes 306, 308 may, for example, act as receiver and transmitter electrodes to detect a touch on the touch-sensitive display 118. The cover 310 is disposed on the upper set of touch-sensing electrodes 306 to protect the electrodes 306. The cover 310 may comprise glass or plastic. The terms upper, lower, top, and bottom are utilized herein for reference only, refer to the orientation of the electronic device 100 as illustrated in the figures, and are not otherwise limiting.

The touch-sensitive overlay 114 is supported on a rigid support 312 disposed between the display 112 and the substrate 304 such that the ground shield 302 is spaced from the lower set of touch-sensing electrodes 308 by an air gap. The rigid support 312 may be a continuous support that the outer margin of the substrate 304 is disposed on. Alternatively, the rigid support 312 may comprise a plurality of supports on which the substrate 304 is disposed. The rigid support 312 may be part of the support tray 212 or may be inserted on the display 112. The rigid support 312 may be any suitable material, such as plastic or metal, sufficient to support the substrate 304 and sufficient to inhibit movement of the sides of the substrate 304 toward the ground shield 302 disposed on the display 112.

A force, such as the force illustrated by the arrow 402 in FIG. 4, applied to the touch-sensitive display 118 may cause bending of the substrate 304 and the upper and lower sets of touch-sensing electrodes 306, 308. Such bending of the substrate 304 reduces the distance between the lower set of touch-sensing electrodes 308 and the ground shield 302. Although the change in distance between the lower set of touch-sensing electrodes 308 and the ground shield 302 may be slight, the change is detected by measuring changes in capacitance between the lower set of touch-sensing electrodes 308 and the ground shield 302. The change in capacitance is utilized to determine a value related to the applied force. The value related to the force may be based on the change in capacitance or may be based on both location of the touch and the change in capacitance. For example, bending of the substrate 304 may be greater when a force is applied near a center of the touch-sensitive display 118 compared to an equivalent force applied near a side of the touch-sensitive display 118. The change in distance between the lower set of touch-sensing electrodes 308 and the ground shield 302 is greater when the force is applied at near the center of the touch-sensitive display than when the force is applied near the side. The value related to the force may be determined based on the location of the touch to account for this difference in the change of distance.

The change in capacitance is proportional to the deflection of the substrate 304 during bending, and the deflection is dependent, for example, on the force and the location of the touch on the touch-sensitive display 118. The location is determined utilizing the touch-sensing electrodes 306, 308. The force, or a value related to the force, may be identified utilizing the measured change in capacitance and the location of the touch to identify an associated force value.

The force may be identified utilizing a table including force values and associated capacitance values for various touch locations. The table may be obtained experimentally during manufacture of the portable electronic device or a similar portable electronic device, for example. To obtain the table experimentally, forces of known values may be applied at locations on the touch-sensitive display and the capacitance determined for each force value at each location to associate the capacitance to the force value for each location. Alternatively, the table may be obtained by modeling, such as finite element modeling, to associate applied force with deflection of the touch-sensitive display based on location and based on known equations or relations associating capacitance with deflection.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

A flowchart illustrating a method of detecting a force applied to the touch-sensitive display is illustrated in FIG. 5. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

When a touch is detected 502 utilizing signals from the upper and lower sets of touch-sensing electrodes 306, 308, measured changes in capacitance between the lower set of touch-sensing electrodes 308 and the ground shield 302 are utilized to determine 504 a value related to the force of the touch. During touch detection, the touch-sensing electrodes 306, 308 are utilized to detect the touch and the ground shield 302 shields the touch-sensing electrodes 306, 308 from interference. The controller 116 may switch the upper set of touch-sensing electrodes 306 to couple the upper set of touch-sensing electrodes to a ground during measurement of capacitance between the lower set of touch-sensing electrodes 308 and the ground shield 302. The controller 116 controls the upper set of touch-sensing electrodes to switch between sensing and ground connections.

For example, a scan of the touch screen utilizing the electrodes 306, 308 to detect touches may be followed by a determination of the change, if any, in capacitance between the lower set of touch-sensing electrodes 308 and the ground shield 302. The change in capacitance that results from a force causing bending of the substrate 304 and the touch-sensing electrodes 306, 308 may be utilized to determine a value related to the applied force. The determination of the change in capacitance is not carried out during touch detection.

Within the stack, the locations of the electrodes 306, 308 and the ground shield 302 are described to provide an example and other locations may be successfully implemented. For example, the upper set of touch-sensing electrodes may be disposed on a bottom side of the cover 310. Alternatively, a single set of touch-sensing electrodes may be utilized to detect the touch.

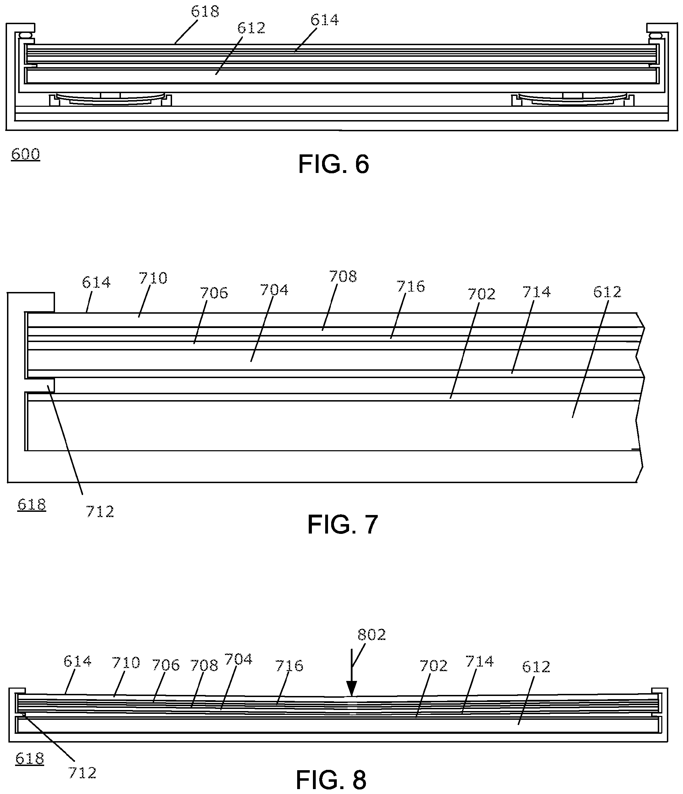

A cross section of another portable electronic device 600 including a touch-sensitive display 618 is shown in FIG. 6. The touch-sensitive display 618 includes a touch-sensitive overlay 614 disposed on a display 612 and supported by a support tray. Many of the components and features of the portable electronic device 600 are similar to those described above for the portable electronic device 100.

A partial cross section of the touch-sensitive display 618 is shown in FIG. 7. In this example, a ground shield 702 is disposed on the display 112. The ground shield 702 is disposed on the display 112 to protect the display from electrostatic discharge.

The touch-sensitive overlay 614 includes a substrate 704, which may comprise glass or plastic. A force-sensing electrode 714 is disposed, for example, on a bottom side of the substrate 704, facing the display 612. The force-sensing electrode 714 may be a single electrode, such as a plate, disposed on the substrate 704 or may be a plurality of electrodes distributed on the bottom side of the substrate 704.

A set of touch-sensing electrodes 708 is disposed on a top side of the substrate 704. A further set of touch-sensing electrodes 706 is disposed on a bottom side of the cover 710. The cover 710 may be adhered to the substrate 704 utilizing a dielectric adhesive 716 such that the touch-sensing electrodes 606 disposed on the bottom side of the cover 710 are separated from the touch-sensing electrodes 708 disposed on the substrate 704. The cover 310 may comprise glass or plastic. The touch-sensing electrodes 706, 708 are utilized to detect a touch and determine a location of the touch on the touch-sensitive display 118.

The touch-sensitive overlay 614 may be supported on a rigid support 712 disposed between the display 612 and the substrate 704 such that the ground shield 702 is spaced from the touch-sensing electrodes 708 by an air gap. The support 712 may be a continuous support that the outer margin of the substrate 704 is disposed on or may comprise, for example, a plurality of spaced apart supports on which the substrate 704 is disposed. The support 712 may be part of the support tray or may be inserted on the display 612.

A force, such as the force illustrated by the arrow 802 in FIG. 8, applied to the touch-sensitive display 618 may cause bending of the cover 710 and the substrate 704. When the cover 710 and the substrate 704 bend, the force-sensing electrode 714 also bends, reducing the distance between the force-sensing electrode 714 and the ground shield 702. The reduction in distance change is detected by detecting changes in capacitance between the force-sensing electrode 714 and the ground shield 702.

During touch detection, the touch-sensing electrodes 708, 706 are utilized to detect the touch and the ground shield 702 shields the touch-sensing electrodes 708, 706 from interference from the display 612. The upper set of touch-sensing electrodes 708 may be grounded during measurement of capacitance between the force-sensing electrode 714 and the ground shield 702.

A value related to an applied force may be determined by determining the change in capacitance between electrodes. The electrodes that are utilized are separated by an air gap and the change results from the applied force causing bending of one of the electrodes and the substrate, which may comprise glass or plastic. The air gap provides protection to the display from damage caused by excessive force imparted on the touch-sensitive overlay. The air gap is advantageous over a compressible medium or elements that may not recover from compression at a suitable rate. For example, compressible medium or elements may be very slow to recover at temperatures below room temperature. A force-sensing electrode and touch-sensing electrodes may be disposed on a substrate and may be disposed on a cover, rather than utilizing a further substrate.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description.

## Claims

1. A device (100) comprising:
a substrate (304) having a first side and a second side;
a first set of touch-sensing electrodes (306) disposed on the first side of the substrate (304); a second set of touch-sensing electrodes (308) disposed on the second side of the substrate (304) and arranged with the first set of touch-sensing electrodes (306) to detect the touch and determine the location of the touch;
a display (112) including a ground shield (302) spaced from the second set of touch-sensing electrodes (308),
wherein the ground shield (302) and the second set of touch-sensing electrodes (308) are arranged to determine a value related to a force imparted on the device (100) based on the location of the touch and a change in capacitance between the second set of touch-sensing electrodes (308) and the ground shield (302) when the force imparted on the device (100) causes the substrate (304) to bend and the distance between the second set of touch-sensing electrodes (308) and the ground shield (302) changes;
the substrate (304) being supported at sides thereof by a rigid support (312) such that the ground shield (302) is spaced from the second set of touch-sensing electrodes (308) by an air gap; the value related to a force being identified utilizing a table including force values and associated capacitance values for various touch locations.

2. The device (100) according to claim 1, wherein the substrate (304) is supported at sides thereof to inhibit movement of the sides toward the display (112) when the force is imparted on the device (100).

3. The device (100) according to claim 1, wherein the support (312) is continuous around the outer margin of the substrate (304) such that the substrate (304) is supported continuously around sides thereof to inhibit movement of the sides toward the display (112) when the force is imparted on the device (100).

4. The device (100) according to claim 1, wherein the touch-sensing electrodes (306,308) are electrodes of a capacitive touch sensor and the ground shield (302) is part of a capacitive force sensor.

5. A method comprising:
detecting a touch (502) and determining a touch location on a touch-sensitive display utilizing a first set of touch sensors and a second set of touch sensors separated from the first set of touch sensors by a substrate;
utilizing a change in capacitance between at least one touch sensor of the second set of touch sensors and a ground shield electrode of the touch-sensitive display to determine (504) a value related to a force causing bending of the substrate and changing the distance between the at least one touch sensor and the ground shield electrode, the substrate (304) being supported at sides thereof by a rigid support (312) such that the ground shield (302) is spaced from the second set of touch-sensing electrodes (308) by an air gap; and
identifying the value related to a force utilizing a table including force values and associated capacitance values for various touch locations on the touch-sensitive display.

6. The method according to claim 5, wherein bending of the substrate comprises bending of a glass substrate including the first set of touch sensors and the second set of touch sensors disposed thereon.

## Patentansprüche

1. Vorrichtung (100), die umfasst:
ein Substrat (304) mit einer ersten Seite und einer zweiten Seite;
einen ersten Satz von berührungserfassenden Elektroden (306), die auf der ersten Seite des Substrats (304) vorgesehen sind;
einen zweiten Satz von berührungserfassenden Elektroden (308), die auf der zweiten Seite des Substrats (304) vorgesehen und mit dem ersten Satz von berührungserfassenden Elektroden (306) zur Erfassung der Berührung und zur Bestimmung des Ortes der Berührung angeordnet sind;
eine Vorrichtung (112), die eine Masseabschirmung (302) umfasst, die sich in Abstand zu dem zweiten Satz von berührungserfassenden Elektroden (308) befindet,
wobei die Masseabschirmung (302) und der zweite Satz von berührungserfassenden Elektroden (308) so angeordnet sind, dass sie einen Wert bezüglich einer auf die Vorrichtung (100) aufgebrachten Kraft auf Grundlage des Ortes der Berührung und einer Kapazitätsänderung zwischen dem zweiten Satz von berührungserfassenden Elektroden (308) und der Masseabschirmung (203) bestimmen, wenn die auf die Vorrichtung (100) aufgebrachte Kraft verursacht, dass sich das Substrat (304) biegt und sich der Abstand zwischen dem zweiten Satz von berührungserfassenden Elektroden (308) und der Masseabschirmung (302) ändert;
wobei das Substrat (304) an Seiten davon durch einen steifen Träger (312) so gestützt wird, dass sich die Masseabschirmung (302) durch einen Luftspalt in Abstand zu dem zweiten Satz von berührungserfassenden Elektroden (308) befindet;
wobei der Wert bezüglich einer Kraft unter Verwendung einer Tabelle ermittelt wird, die Kraftwerte und entsprechende Kapazitätswerte für unterschiedliche Berührungsorte umfasst.

2. Vorrichtung (100) nach Anspruch 1, wobei das Substrat (304) zum Verhindern einer Bewegung der Seiten in Richtung der Vorrichtung (112) an Seiten davon gehalten wird, wenn die Kraft auf die Vorrichtung (100) aufgebracht wird.

3. Vorrichtung (100) nach Anspruch 1, wobei der Träger (312) um den äußeren Rand des Substrats (304) durchgehend verläuft, so dass das Substrat (304) zum Verhindern einer Bewegung der Seiten in Richtung der Vorrichtung (112) durchgehend um die Seiten davon gestützt wird, wenn die Kraft auf die Vorrichtung (100) aufgebracht wird.

4. Vorrichtung (100) nach Anspruch 1, wobei die berührungserfassenden Elektroden (306, 308) Elektroden eines kapazitiven Berührungssensors sind und die Masseabschirmung (302) Teil eines kapazitiven Kraftsensors ist.

5. Verfahren, das umfasst:
Erfassen einer Berührung (502) und Bestimmen eines Berührungsortes auf einer berührungsempfindlichen Vorrichtung unter Verwendung eines ersten Satzes von Berührungssensoren und eines zweiten Satzes von Berührungssensoren, der durch ein Substrat von dem ersten Satz von Berührungssensoren getrennt ist;
Verwenden einer Kapazitätsänderung zwischen mindestens einem Berührungssensor des zweiten Satzes von Berührungssensoren und einer Masseabschirmungselektrode der berührungsempfindlichen Vorrichtung zum Bestimmen (504) eines Werts bezüglich einer Kraft, die ein Biegen des Substrats und eine Änderung des Abstands zwischen dem mindestens einen Berührungssensor und der Masseabschirmungselektrode verursacht, wobei das Substrat (304) an Seiten davon durch einen steifen Träger (312) so gestützt wird, dass sich die Masseabschirmung (302) durch einen Luftspalt in Abstand zu dem zweiten Satz von berührungserfassenden Elektroden (308) befindet, und
Ermitteln des Werts bezüglich einer Kraft unter Verwendung einer Tabelle, die Kraftwerte und entsprechende Kapazitätswerte für unterschiedliche Berührungsorte auf der berührungsempfindlichen Vorrichtung umfasst.

6. Verfahren nach Anspruch 5, wobei das Biegen des Substrats umfasst:
Biegen eines Glassubstrats, das den darauf vorgesehenen ersten Satz von Berührungssensoren und den zweiten Satz von Berührungssensoren umfasst.

## Revendications

1. Dispositif (100) comprenant :
un substrat (304) ayant un premier côté et un second côté ;
un premier ensemble d'électrodes de détection de toucher (306) disposées sur le premier côté du substrat (304) ;
un second ensemble d'électrodes de détection de toucher (308) disposées sur le second côté du substrat (304) et agencées avec le premier ensemble d'électrodes de détection de toucher (306) pour détecter le toucher et déterminer l'emplacement du toucher ;
un dispositif d'affichage (112) comprenant un blindage de masse (302) espacé du second ensemble d'électrodes de détection de toucher (308),
le blindage de masse (302) et le second ensemble d'électrodes de détection de toucher (308) étant agencés pour déterminer une valeur associée à une force transmise sur le dispositif (100) sur la base de l'emplacement du toucher et d'un changement de capacité entre le second ensemble d'électrodes de détection de toucher (308) et le blindage de masse (302) lorsque la force transmise sur le dispositif (100) amène le substrat (304) à plier et que la distance entre le second ensemble d'électrodes de détection de toucher (308) et le blindage de masse (302) change ;
le substrat (304) étant porté au niveau de côtés de celui-ci par un support rigide (312) de telle sorte que le blindage de masse (302) est espacé du second ensemble d'électrodes de détection de toucher (308) par une lame d'air ;
la valeur associée à une force étant identifiée en utilisant une table comprenant des valeurs de force et des valeurs de capacité associées pour divers emplacements de toucher.

2. Dispositif (100) selon la revendication 1, dans lequel le substrat (304) est porté au niveau de côtés de celui-ci pour empêcher un mouvement des côtés vers le dispositif d'affichage (112) lorsque la force est transmise sur le dispositif (100).

3. Dispositif (100) selon la revendication 1, dans lequel le support (312) est continu autour de la marge externe du substrat (304) de telle sorte que le substrat (304) est porté de manière continue autour de côtés de celui-ci pour empêcher un mouvement des côtés vers le dispositif d'affichage (112) lorsque la force est transmise sur le dispositif (100).

4. Dispositif (100) selon la revendication 1, dans lequel les électrodes de détection de toucher (306, 308) sont des électrodes d'un capteur tactile capacitif et le blindage de masse (302) est une partie d'un capteur de force capacitif.

5. Procédé comprenant :
détecter un toucher (502) et déterminer un emplacement de toucher sur un dispositif d'affichage sensible au toucher en utilisant un premier ensemble de capteurs tactiles et un second ensemble de capteurs tactiles séparé du premier ensemble de capteurs tactiles par un substrat ;
utiliser un changement de capacité entre au moins un capteur tactile du second ensemble de capteurs tactiles et une électrode de blindage de masse du dispositif d'affichage sensible au toucher pour déterminer (504) une valeur associée à une force provoquant une flexion du substrat et une modification de la distance entre l'au moins un capteur tactile et l'électrode de blindage de masse, le substrat (304) étant porté au niveau de côtés de celui-ci par un support rigide (312) de telle sorte que le blindage de masse (302) est espacé du second ensemble d'électrodes de détection de toucher (308) par une lame d'air ; et
identifier la valeur associée à une force en utilisant une table comprenant des valeurs de force et des valeurs de capacité associées pour divers emplacements de toucher sur le dispositif d'affichage sensible au toucher.

6. Procédé selon la revendication 5, dans lequel la flexion du substrat comprend la flexion d'un substrat en verre comprenant le premier ensemble de capteurs tactiles et le second ensemble de capteurs tactiles disposés sur celui-ci.
